Europäisches Patentamt

European Patent Office

Office européen des brevets

(11) Veröffentlichungsnummer: **0 506 996 A1**

## (12) EUROPÄISCHE PATENTANMELDUNG

(21) Anmeldenummer: **91112277.8**

(22) Anmeldetag: **22.07.91**

(51) Int. Cl.5: **F16J 15/12**, F16J 15/08, F02F 11/00

(30) Priorität: **04.04.91 DE 4110798**
      **11.04.91 DE 4111791**

(43) Veröffentlichungstag der Anmeldung:
      **07.10.92 Patentblatt 92/41**

(84) Benannte Vertragsstaaten:
      **DE FR GB**

(71) Anmelder: **Stecher, Friedhelm**
      **Lohrstr. 72**
      **W-5090 Leverkusen-Hitdorf(DE)**

(72) Erfinder: **Stecher, Friedhelm**
      **Lohrstr. 72**
      **W-5090 Leverkusen-Hitdorf(DE)**

(74) Vertreter: **Weber, Otto Ernst, Dipl.-Phys. et al**
      **Weber & Heim Hofbrunnstrasse 36**
      **W-8000 München 71(DE)**

(54) **Flachdichtung.**

(57) Es wird eine Flachdichtung beschrieben, die aus mindestens zwei gegeneinander verschiebbaren Lagen besteht. Die jeweiligen Dichtungsseiten können sich daher mit den abzudichtenden Bauteilen beispielsweise temperaturbedingt ausdehnen bzw. zusammenziehen, ohne daß es zu Relativbewegungen im eigentlichen Dichtspalt kommt.

Fig. 1

EP 0 506 996 A1

Die Erfindung betrifft eine Flachdichtung, insbesondere eine Zylinderkopfdichtung, gemäß dem Oberbegriff des Anspruchs 1.

Derartige Flachdichtungen können hohen Temperaturen ausgesetzt sein, in deren Folge unterschiedlich starke Wärmeausdehnungen der beiden abzudichtenden Bauteile auftreten können. Ein bekanntes Beispiel ist ein Verbrennungsmotor mit einem Graugußkurbelgehäuse und einem Aluminiumzylinderkopf, insbesondere wenn es sich dabei um einen Reihenmotor mit einem zusammenhängenden Zylinderkopf handelt. Hier treten beim Anfahren und beim Abkühlen des Motors, bedingt durch die unterschiedlichen Ausdehnungskoeffizienten bzw. Wärmeausdehnung der eingesetzten Werkstoffe, große Schiebebewegungen im Bereich der Zylinderkopfdichtung auf, die an den äußeren Zylindern im Bereich einiger Zehntel Millimeter liegen können. Aufgrund solcher immer wiederkehrender Schiebebewegungen kommt es zu Verschleiß, welcher die Dichtwirkung vermindert. Die abdichtenden Oberflächen oder deren Beschichtung können zerstört bzw. zerrieben werden.

Ein weiteres Problem liegt in der reibungsbedingten Verformung des Zylinderblocks, durch welche sich die Bohrungen verziehen können. Dadurch wird die Abdichtfunktion der Kolbenringe behindert.

Es sind Dichtungen bekannt, bei welchen man durch eine Oberflächenbeschichtung mit niedrigem Reibungskoeffizienten eine Verbesserung zu erzielen versucht. Das Problem hierbei ist jedoch, daß neben der Gleitung die relativ rauhe Dichtfläche mittels plastisch verformbarer Oberfläche der Dichtung so ausgefüllt werden muß, daß sie auch hohen Gasdrücken standhält. Diese Doppelfunktion (Abdichten und Gleiten bei gegebener Rauheit) ist allenfalls mit relativ großem Aufwand erreichbar.

Der Erfindung liegt die Aufgabe zugrunde, eine Flachdichtung der eingangs genannten Art anzugeben, welche auch für abzudichtende Flächen geeignet ist, die material- und/oder temperaturbedingte Schiebewegungen ausführen.

Diese Aufgabe wird dadurch gelöst, daß die Dichtung mindestens zwei gegeneinander verschiebbare Lagen aufweist.

Ein Grundgedanke der Erfindung ist darin zu sehen, daß die mit gegenüberliegenden Dichtflächen in Kontakt stehenden und hierzu parallelen Dichtungsseiten mechanisch voneinander getrennt sind. Die Bewegung fällt nicht mehr in die Dichtfläche, sondern in die Bewegungsfläche der beiden Lagen. Da die Oberflächenrauheit der Dichtungslagen wesentlich geringer ausgebildet werden kann als die der abzudichtenden Bauteilflächen, läßt sich eine reibungsarme Schiebebewegung aufnehmen. Die Dichtungsseiten können daher zusammen mit den abzudichtenden Teilen Bewegungen ausführen, ohne daß sich diese auf die gegenüberliegenden Dichtflächen überträgt.

Das heißt mit anderen Worten, daß eine Entkopplung der gegenüberliegenden Dichtflächen vorgenommen wird. Andererseits können sich die Dichtungsseiten optimal an die abzudichtenden Gegenflächen anpassen. Auf diese Weise wird die Funktion der Abdichtung von der Schiebebewegung getrennt. Die jeweilige Dichtungsseite kann sich mit dem abzudichtenden Bauteil ausdehnen bzw. zusammenziehen, ohne daß es zu Relativbewegungen im eigentlichen Dichtspalt kommt.

Eine vorteilhafte Weiterbildung der Erfindung besteht darin, daß sich zwischen den Lagen zumindest bereichsweise Festschmierstoff, bevorzugt Graphit und/oder $MoS_2$ mit Bindemittel befindet.

Es kann sich als zweckmäßig erweisen, daß die Lagen aus unterschiedlichen Werkstoffen bestehen. Gut geeignet ist eine Kombination aus Aluminium einerseits und Stahl andererseits. Bei einer Zylinderkopfdichtung ist die Aluminium-Lage typischerweise 1,1 mm und die Stahl-Lage 0,5 mm dick. Eine Festschmierstoffschicht ist bei diesem Beispiel gegebenenfalls 0,01 mm dick. Wenn eine derartige Dichtung zwischen einen Aluminiumzylinderkopf und ein Graugußkurbelgehäuse in entsprechender Zuordnung der Dichtungsseiten gelegt wird, hat dies den Vorteil, daß aufgrund der gleichen Wärmeausdehnung eine besonders gute Anpassung der Gegenflächen erfolgt.

Eine bevorzugte Weiterbildung der Erfindung besteht darin, daß eine Außenlage zumindest an allen im Einsatz freitragenden Stellen eine zur Durchbiegung der abzudichtenden Flächen komplementäre dreidimensionale Dichtfläche aufweist. Durch die Wahl von entsprechenden Werkstoffen oder durch Prägung mit entsprechend großem Druck ist diese Dichtung derart druckfest, daß sie im Einbauzustand und unter Betriebsbedingungen nicht mehr verformt wird.

Für den Vertrieb, die Lagerhaltung und die Montage erweist es sich als zweckmäßig, daß die Lagen der Dichtung zumindest durch örtliche Klebepunkte lösbar fixiert sind. Die Haftfähigkeit bzw. die Klebekraft ist hierbei so bemessen, daß die Fixierung unter Betriebsbedingungen, insbesondere aufgrund von hohen Temperaturen oder aufgrund der auftretenden Scherkräfte, aufgehoben wird. Wird beispielsweise eine Zylinderkopfdichtung derartig präpariert, so können sich die Dichtungslagen bei Motorbetrieb ungehindert gegeneinander verschieben.

Bei Dichtungen mit topographisch an die Durchbiegung der abzudichtenden Flächen durch komplementäre Ausformung angepaßten Oberflächen kann eine besonders gute Dichtwirkung dadurch erhalten werden, daß die Oberfläche mit einem beständigen Kleber versehen ist. Diese Oberflächen gehen daher eine dauerhafte Verbindung mit den Gegenflächen ein und ein gegebenenfalls erforderlicher Ausgleich aufgrund von temperaturbedingten Verschiebungen oder ähnlichem kann über die Gleitflächen der einzelnen Lagen erfolgen.

Nachfolgend wird die Erfindung anhand von zwei in der Zeichnung dargestellten Ausführungsbeispielen weiter beschrieben.

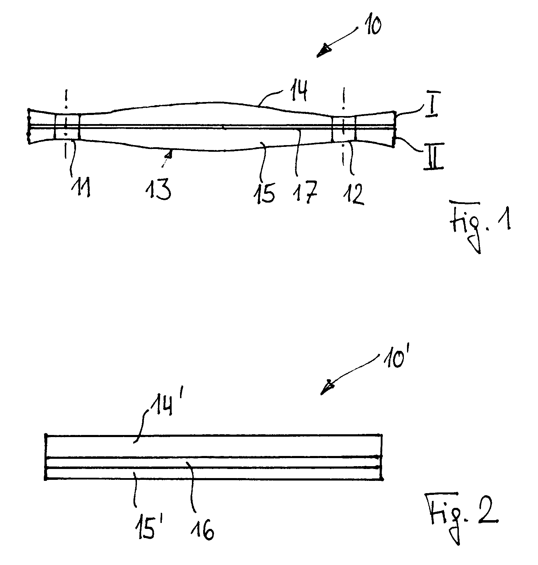

Fig. 1 und Fig. 2 zeigen jeweils einen Vertikal-Querschnitt durch einen Abschnitt von Zylinderkopfdichtungen zwischen zwei Brennraumdurchtrittsöffnungen.

Der in der Fig. 1 dargestellte Abschnitt einer Zylinderkopfdichtung 10 ist mit zwei nebeneinanderliegenden Schraubenöffnungen 11,12 versehen, zwischen welchen ein Steg 13 verläuft.

Die Zylinderkopfdichtung 10 weist im Beispiel zwei Lagen I, II auf, die gegeneinander verschiebbar sind. Die einem Zylinderkopf (nicht dargestellt) zugeordnete obere Lage I besteht aus einer Aluminiumplatte 14 und die einem Zylinderblock (nicht dargestellt) zugeordnete untere Lage II besteht aus einer Stahlplatte 15. Im Falle eines Aluminium-Zylinderkopfes hat die Aluminiumplatte 14 die gleiche Wärmeausdehnung wie dieser. Die Stahlplatte 15 hat die gleiche Wärmeausdehnung wie der zugeordnete Zylinderblock.

Zwischen der Aluminiumplatte 14 und der Stahlplatte 15 befindet sich eine dünne Lage Festschmierstoff (17), beispielsweise aus Graphit und/oder MoS2 mit Bindemittel.

In dem dargestellten Beispiel sind die Dichtflächen der Aluminiumplatte 14 und der Stahlplatte 15 mit einer Topographie versehen, welche jeweils zu den Durchbiegungen der entsprechenden Gegenflächen im Einbauzustand und im Betriebszustand komplementär sind.

Fig. 2 veranschaulicht einen dreilagigen Aufbau einer Zylinderkopfdichtung 10' mit einer zylinderkopfseitigen Aluminiumplatte 14', einer motorblockseitigen Stahlplatte 15' und einer dazwischenliegenden Graphitplatte 16, die etwa die Dicke der Stahlplatte aufweist. Die Graphitplatte ist vor dem Einbau mit einem so hohen Druck gepreßt, der größer ist als der im Einbauzustand und unter Betriebsbedingungen auftretende Druck.

**Patentansprüche**

1. Flachdichtung, insbesondere Zylinderkopfdichtung,
   dadurch **gekennzeichnet,**
   daß sie mindestens zwei gegeneinander verschiebbare Lagen (I,II) aufweist.

2. Flachdichtung nach Anspruch 1,
   dadurch **gekennzeichnet,**
   daß die Lagen (I,II) aus unterschiedlichen Werkstoffen, bevorzugt Aluminium einerseits und Stahl andererseits, bestehen.

3. Flachdichtung nach Anspruch 1 oder 2,
   dadurch **gekennzeichnet,**
   daß sich zwischen den Lagen (I,II) zumindest bereichsweise Festschmierstoff, bevorzugt Graphit oder MoS2 mit Bindemittel, befindet.

4. Flachdichtung nach Anspruch 3,
   dadurch **gekennzeichnet,**
   daß es sich um eine Zylinderkopfdichtung handelt, und daß sich der Festschmierstoff an besonders stark druckbelasteten Stellen, insbesondere im Brennraumbereich befindet.

5. Flachdichtung nach einem der vorhergehenden Ansprüche,
   dadurch **gekennzeichnet,**
   daß eine Außenlage zumindest an allen im Einsatz freitragenden Stellen eine zur Durchbiegung der abzudichtenden Flächen komplementäre dreidimensionale Dichtfläche aufweist.

6. Flachdichtung nach Anspruch 5,
   dadurch **gekennzeichnet,**
   daß die Oberfläche mit einem beständigen Kleber versehen ist, welcher mit den Gegenflächen im eingebauten Zustand und unter Betriebsbedingungen eine dauerhafte Verbindung eingeht.

7. Flachdichtung nach einem der vorhergehenden Ansprüche,
   dadurch **gekennzeichnet,**
   daß die Lagen (I,II) zumindest durch örtliche Klebepunkte lösbar in der Weise fixiert sind, daß die Fixierung unter Betriebsbedingungen aufgehoben wird.

8. Flachdichtung nach Anspruch 7,
   dadurch **gekennzeichnet,**
   daß ein Kleber verwendet wird, der seine Haftfähigkeit bei Motorbetriebstemperaturen verliert.

9. Flachdichtung nach einem der vorhergehenden Ansprüche,
   dadurch **gekennzeichnet,**
   daß drei Lagen vorhanden sind, und daß die mittlere Lage aus einer Graphitplatte (16) besteht, die vor dem Einbau mit in der Weise gepreßt wurde, daß der Preßdruck größer ist als der im eingebauten Zustand und im Betrieb maximal auftretende Druck.

Fig. 1

Fig. 2

# EUROPÄISCHER RECHERCHENBERICHT

**Europäisches Patentamt**

Nummer der Anmeldung

EP    91 11 2277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 799 695 (YOSHINO)<br>* Spalte 7, Zeile 42 - Zeile 44; Abbildungen 5-9 * | 1 | F16J15/12<br>F16J15/08<br>F02F11/00 |
| A | US-A-4 776 602 (GALLO)<br>* Spalte 2, Zeile 36 - Zeile 54; Abbildungen * | 1-2 | |
| A | US-A-4 705 278 (LOCACIUS ET AL.)<br>* Spalte 3, Zeile 58 - Spalte 4, Zeile 59; Abbildungen * | 1-4 | |
| A | US-A-3 740 062 (ROBINS)<br>* Spalte 1, Zeile 1 - Zeile 50; Abbildungen 1-2 * | 5 | |

**RECHERCHIERTE SACHGEBIETE (Int. Cl.5 )**

F16J
F02F

Der vorliegende Recherchenbericht wurde für alle Patentansprüche erstellt

| Recherchenort | Abschlußdatum der Recherche | Prüfer |
|---|---|---|
| DEN HAAG | 28 JANUAR 1992 | NARMINIO A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)